# EUROPÄISCHE PATENTSCHRIFT

(11) **EP 2 537 421 B1**
(45) Veröffentlichungstag und Bekanntmachung des Hinweises auf die Patenterteilung: **19.11.2014**
(21) Anmeldenummer: 11170600.8
(22) Anmeldetag: 20.06.2011
(51) Int. Cl.: A23L 1/10, C12C 1/02, C12C 1/027, C12C 1/067

(54) **Vorrichtung und Verfahren zur Behandlung von Korn**
Method and device for processing grain
Dispositif et procédé destinés au traitement de grains

(43) Veröffentlichungstag der Anmeldung: 26.12.2012
(73) Patentinhaber: Bühler GmbH, 38114 Braunschweig (DE)
(72) Erfinder: Bischoff, Wolf-Eckart, 38176 Wendeburg (DE); Silbermann, Kai, 38116 Braunschweig (DE); Görlitz, Frank-Otto, 38116 Braunschweig (DE)
(74) Vertreter: Vossius & Partner

(56) Entgegenhaltungen:
- DE-A1- 2 551 624
- ES-A1- 2 284 290
- DATABASE WPI Week 200214 Thomson Scientific, London, GB; AN 2002-104126 XP000002657008, & KR 2001 0078074 A (LEE Y S) 20. August 2001 (2001-08-20)

## Beschreibung

Die Erfindung betrifft eine Vorrichtung sowie ein Verfahren zur Behandlung, insbesondere Weichen, Keimen, Darren, Fermentieren und/oder Kombinationen daraus von Korn nach den Merkmalen der Oberbegriffe der unabhängigen Patentansprüche.

Im Zusammenhang mit Getreide, insbesondere Braugerste, hat das Weichen des Korns als Vorbereitung zum eigentlichen Bierbrauen besondere Bedeutung. Hierbei wird das Korn in unterschiedlichen Zeitintervallen unter Wasser gesetzt. Der Anstieg des Wassergehalts im Korn beendet die Keimruhe und bewirkt den Beginn der Keimung. Im einem anschliessenden Keimungsschritt wird eine weitere Feuchtigkeitszugabe insbesondere durch Aufsprühen von Wasser bewirkt. Das hierbei erhaltene Grünmalz wird anschliessend auf der so genannten Darre getrocknet beziehungsweise gedarrt und damit als Malz lagerfähig. Vorrichtungen zum Mälzen werden traditionell als Mälzereien bezeichnet.

Solche Einweich- beziehungsweise Keimungsschritte finden auch bei weiteren Pflanzenarten Anwendung. Als weiteres Beispiel sei hier die Linse erwähnt, welche zur Pflanzenfamilie der Hülsenfrüchte gehört. Auch Linsen beginnen nach ausreichender Einweichzeit zu keimen. Es ist bekannt, dass unter anderem die damit einhergehenden Abbauvorgänge im Korn den Gehalt an B-Vitaminen vervielfachen lassen. Durch das Einweichen von Körnern und Samen und Überwinden der Keimruhe beginnt der Keimling Vitamine zu produzieren und wird dadurch ernährungsphysiologisch aufgewertet. Aus IN1530DEL2006 ist beispielsweise bekannt, Linsensamen zu keimen.

Nebst weiteren Arten Getreide und Hülsenfrüchten sind solche Keimungsschritte auch bei Pseudogetreide und Ölsaaten möglich, um solche Nahrungsmittel ernährungsphysiologisch aufzuwerten. Im Sinne der Anmeldung werden Getreide, Pseudogetreide, Ölsaaten und Hülsenfrüchte und / oder deren Bestandteile unter dem Begriff Korn zusammengefasst.

Aus dem Stand der Technik sind Mälzereien bekannt, bei welchen mittels temperierter und befeuchteter Luft beispielsweise in so genannten Keimkasten nach Saladin das Keimgut auf einer Platte mit Öffnungen, auch Lochblech genannt, gekeimt wird.

Das Anbringen eines Lochblechs unterhalb des zu verarbeitenden Korns erlaubt es, Wasser zum Einweichen oder Luft während dem Keimen beziehungsweise Darren mit dem zu verarbeitenden Korn durch das Lochblech in Kontakt zu bringen, ohne dass das zu verarbeitende Korn zwischen Prozessschritten wie dem Keimen und Darren beispielsweise in einen weiteren Prozessraum überführt werden muss.

Ein Lochblech in einer Vorrichtung zur Behandlung von Korn sollte so angeordnet sein, dass eine einfache Entleerung des Prozessraums nicht behindert wird. Die konstruktive Anordnung des Lochblechs in einer Vorrichtung zur Behandlung von Korn kann im Weiteren zu Bereichen mit sich verdichtendem Korn im Prozessraums führen und dadurch Nachteile mit sich bringen. Das Verkeilen der Triebe eines Keimling während des Keimens des zu verarbeitenden Korns wird als Verwachsen bezeichnet. Dieses Verwachsen und die damit einhergehende Bildung sich verdichtender Bereiche ist nachteilig, da diese einer gleichmässigen Belüftung und Temperaturverteilung in der Kornschicht des Prozessraums entgegenwirkt. Durch ein homogenes Umwälzen der Kornschicht mittels Wendeschnecken oder Wendespiralen wird die Kornschicht aufgelockert, sich verdichtende Bereiche verringert und die Belüftung beziehungsweise Temperaturverteilung verbessert.

In FR 670 142 ist das Lochblech direkt in einem Konus angebracht und eine Entleerung des Prozessraums in Richtung der Schwerkraft erleichtert, jedoch wird ein Bereich mit sich verdichtendem Korn im Konus mit geringer Umwälzung beziehungsweise Wendeaktivität aufgrund des sich verringernden Querschnitts im Konus geschaffen.

Aus der ES 2 284 290 A1 ist eine Mälzerei bekannt, bei welcher ein Lochblech über einem Konus angebracht ist, an dessen unterem Ende sich eine Entleerungsöffnung befindet. Das Lochblech muss aufwendig vom Konus axial abgehoben werden, um das verarbeitete Korn über den Konus durch die Entleerungsöffnung aus der Mälzerei zu entleeren. Im Weiteren weist die Mälzerei gemäss ES 2 284 290 A1 eine Mittelsäule auf, womit der Querschnitt des Prozessraums verringert beziehungsweise sich Bereiche mit sich verdichtendem Korn mit geringer Umwälzung in der Kornschicht geschaffen werden.

DE 25 51 624 A1 und KR 2001 0078074 A offenbaren Keimeinrichtungen.

Es ist deshalb eine Aufgabe der vorliegenden Erfindung, eine Vorrichtung sowie ein Verfahren zum Weichen, Keimen und Darren, Fermentieren und / oder Kombinationen daraus bereitzustellen, welche die beschriebenen Nachteile des Standes der Technik überwindet. Insbesondere sollen eine Vorrichtung und ein Verfahren zum Weichen, Keimen, Darren, Fermentieren und / oder Kombinationen daraus mit einem Lochblech bereitgestellt werden, wobei eine einfache Entleerung des verarbeiteten Korns aus dem Prozessraum gewährleistet ist und gleichzeitig sich verdichtende Bereiche mit geringer Umwälzung in der Kornschicht des Prozessraums verringert werden.

Erfindungsgemäss wird diese Aufgabe mit einer Vorrichtung und einem Verfahren mit den Merkmalen der unabhängigen Patentansprüche gelöst.

Die erfindungsgemässe Vorrichtung zum Weichen, Keimen, Darren, Fermentieren und/oder Kombinationen daraus umfasst eine Aufnahmeeinrichtung zur Aufnahme einer Platte mit mindestens einer Öffnung und einer Prozessraumwand. Die Platte bildet zusammen mit der Prozessraumwand zunächst einen auf der der Platte abgewandten Seite offenen Prozessraum. Mittels einer Abdeckung für die Prozessraumwand wird ein geschlossener Prozessraum gebildet. Bei bestimmungsgemässem Gebrauch sind die Abdeckung und die Prozessraumwand im Wesentlichen dichtend zueinander ausgebildet. Insbesondere ist der Prozessraum durch die Prozessraumwand und die Abdeckung dichtend zur Umgebung gebildet.

Bevorzugt ist zudem zur Entleerung der Vorrichtung die Aufnahmeeinrichtung an und / oder in einer Befestigungseinrichtung anbringbar, wobei die Aufnahmeeinrichtung schwenkbar relativ zur Befestigungseinrichtung gelagert ist.

Im Weiteren kann auch zur Entleerung der Vorrichtung die Platte mit mindestens einer Öffnung mindestens zwei insbesondere an einer gemeinsamen Achse bei bestimmungsgemässem Gebrauch in Richtung der Schwerkraft klappbare Teile umfassen. Durch das Klappen der Teile entsteht eine für das Korn passierbare Öffnung zwischen den klappbaren Teilen der Platte und der Aufnahmeeinrichtung zu einer Abfuhreinrichtung, insbesondere zu einer Öffnung zur Abfuhr des Korns, während in einer Schliessstellung der klappbaren Teile zur Aufnahmeeinrichtung kein Korn zur Abfuhreinrichtung passieren kann.

Im Sinne der Anmeldung wird unter Klappen der Teile der Platte in Richtung der Schwerkraft verstanden, dass der der Achse abgewandte Abschnitt des Teils während der Klappbewegung eine Komponente des Bewegungsvektors im Wesentlichen parallel zur Schwerkraftrichtung beschreibt.

Vorzugsweise sind die klappbaren Teile der Platte mit einer Aufhängeeinrichtung lösbar verbunden zum Öffnen und Schliessen des der Platte zur Aufnahmeeinrichtung.

Bevorzugt umfasst die Aufhängeeinrichtung zumindest mindestens eine mit jeweils einem klappbaren Teil der Platte verbundene, insbesondere zugbelastete, Stange oder Kette, ein lösbar zur Stange oder Kette der Aufhängeeinrichtung verbundenes Aufsetzelement sowie ein Halteelement, auf welchem das Aufsetzelement aufliegt in einer Schliessstellung der klappbaren Teile der Platte. Durch Lösen des Aufsetzelements von der Aufhängeeinrichtung und / oder Trennen des Aufsetzelements vom Halteelement öffnen sich die klappbaren Teile in Richtung der Schwerkraft.

Vorzugsweise ist das Halteelement mit der Prozessraumwand verbunden. Im Weiteren sind bevorzugt die Stangen der Aufhängeeinrichtung im Wesentlichen dichtend zur Abdeckung ausgebildet.

Zudem können zur Entleerung der Vorrichtung sowohl eine schwenkbar relativ zur Befestigungseinrichtung gelagerte Aufnahmeeinrichtung als auch eine Platte mit mindestens einer Öffnung, mindestens die zwei insbesondere an einer gemeinsamen Achse in Richtung der Schwerkraft klappbare Teile umfasst, vorgesehen sein.

Die Platte mit mindestens einer Öffnung kann eben, konvex oder konkav ausgestaltet sein und / oder lokale Vertiefungen oder Erhebungen aufweisen.

Im Sinne der Erfindung kann die Abdeckung die Form einer im Wesentlichen flachen Platte oder einer Haube mit einer Mantelfläche im Wesentlichen vertikal zu einer Deckfläche aufweisen.

Vorteilhaft ist die Prozessraumwand in Umfangsrichtung geschlossen, insbesondere zur Bildung einer Mantelfläche, deren eine Stirnfläche mittels der Platte zumindest teilweise abdeckbar ist.

Dichtend zur Umgebung soll hierbei kontrollierte, gesteuerte Gaszufuhr, insbesondere Luftzufuhr, beziehungsweise kontrollierte, gesteuerte Gasabfuhr, insbesondere Luftabfuhr, nicht ausschliessen, insbesondere durch die Öffnung der Platte.

Durch Trennen der Abdeckung von der Prozessraumwand kann der Prozessraum zur Umgebung geöffnet werden. Hieraus ergibt sich vorteilhaft, dass das verarbeitete Korn über der Platte mit mindestens einer Öffnung schonend aus dem Prozessraum entfernt werden kann. Dies ist insbesondere für Linsen vorteilhaft, welche im Gegensatz zu Malz bereits als Endprodukt an den Konsumenten gelangen.

Die Schwenkbarkeit der Aufnahmeeinrichtung hat den Vorteil, dass damit die Entleerung des Prozessraums unterstützt werden kann, da der Prozessraum mit der Aufnahmeeinrichtung verschwenkt wird.

Vorzugsweise soll die Vorrichtung geeignet sein für einen Grössenmassstab, welcher einem Versuchsmassstab von 5 bis 1'000kg entspricht. Bevorzugt werden hierbei Chargengrössen von 10 bis 200kg von zu verarbeitendem Korn eingesetzt.

Eine Dichtung zwischen Abdeckung und Prozessraumwand ist bevorzugt auf der dem Prozessraum abgewandten Seite angebracht, insbesondere an der Abdeckung und / oder an der Prozessraumwand.

Besonders bevorzugt ist eine Dichtung stirnseitig auf der der Platte abgewandten Seite der Prozessraumwand angebracht.

Vorzugsweise wird die Abdeckung zur Prozessraumwand mit Spannverschlüssen dichtend verschlossen.

Eine Öffnung der Platte mit mindestens einer Öffnung ist vorzugsweise so ausgestaltet, dass kein zu verarbeitendes Korn aus dem Prozessraum durch diese hindurch treten kann. Lediglich Fluide wie beispielsweise Luft oder Wasser können eine solche Öffnung passieren.

Bevorzugt ist die Abdeckung relativ zur Prozessraumwand in axialer Richtung gegeneinander dichtend verschiebbar angeordnet und insbesondere an der Befestigungseinrichtung anbringbar.

Noch bevorzugter ist die Abdeckung relativ zur Prozessraumwand schwenkbar angeordnet und insbesondere an der Befestigungseinrichtung anbringbar.

Unter einer axialen, dichtenden Verschiebung eine Verschiebung in axialer Richtung verstanden, während der die Abdeckung und die Prozessraumwand dichtend zueinander ausgebildet sind.

Insbesondere können Dichtungen zumindest abschnittsweise beabstandet in axialer Richtung zwischen Abdeckung und Prozessraumwand angebracht sein.

Eine Schwenkbarkeit der Abdeckung relativ zur Prozessraumwand ist vorteilhaft aufgrund des einfachen Öffnens und Verschliessens des Prozessraums.

Die Verschiebung beziehungsweise das Schwenken der Abdeckung relativ zur Prozessraumwand wird vorzugsweise dadurch erleichtert, dass die Abdeckung an einer Befestigungseinrichtung anbringbar ist.

Insbesondere kann zwischen Abdeckung und Befestigungseinrichtung eine Führung zum Verschieben der Abdeckung angebracht sein, welche bevorzugt durch Kunststoffgleitschienen oder Rollen ausgestaltet sein.

Die Aufnahmeeinrichtung kann mittels zumindest eines Lagers, insbesondere über zwei im Wesentlichen gegenüberliegende Lager an der Befestigungseinrichtung lagerbar sein. Der Vorteil einer derartigen Lagerung mit zwei Lagern gegenüber einer Einfachlagerung liegt in einer erhöhten Tragfähigkeit für zu verarbeitendes Korn der Aufnahmeeinrichtung an der Befestigungseinrichtung.

Vorzugsweise ist zum Schwenken der Abdeckung von der Prozessraumwand ein Lager in der Befestigungseinrichtung angebracht. Im Weiteren ist bevorzugt eine Gasdruckfeder beziehungsweise ein Gasdruckdämpfer, insbesondere zwischen Abdeckung und Befestigungseinrichtung, oder eine ausbalancierte Lagerung derart angebracht, dass das Aufklappen von der Prozessraumwand erleichtert ist.

Insbesondere ist die Aufnahmeeinrichtung schwenkbar relativ zur Befestigungseinrichtung in einem Winkel α zu einer Vertikalstellung der Aufnahmeeinrichtung von bevorzugt +90°, noch bevorzugter ±110°, am meisten bevorzugt +180°.

Unter einer Vertikalstellung der Aufnahmeeinrichtung wird im Sinne der vorliegenden Anmeldung diejenige Stellung verstanden, bei der eine Senkrechte auf der durch die in der Aufnahmeeinrichtung aufgenommenen Platte aufgespannten Ebene im Wesentlichen parallel zur Wirkung der Schwerkraft liegt.

Gerade im Versuchsmassstab, wo oft nur kleine Volumen an zu verarbeitendem Korn eingesetzt werden, kann es im Rahmen einer einfachen Handhabung bevorzugt sein, wenn die Abdeckung je nachdem nur manuell und/oder mit motorischer Kraft relativ zur Prozessraumwand verschiebbar ist.

Die Abdeckung kann insbesondere mit verschiedenen Mitteln relativ zur Prozessraumwand verschoben und / oder geschwenkt werden, wobei dies anhand eines Seilzuges, eines Spindelhubantriebs sowie einem hydraulischen, pneumatischen beziehungsweise elektrischen Antriebs erfolgen kann. Hierbei ist auch vorstellbar, dass solche Mittel einzeln oder Kombinationen davon Verwendung finden.

Vorzugsweise können die Abdeckung und die Prozessraumwand durch die axiale Verschiebung beziehungsweise das Schwenken der Abdeckung derart positioniert werden, dass die Aufnahmeeinrichtung relativ zur Befestigungseinrichtung von der Vertikalstellung in eine Ausschwenkposition schwenkbar ist.

Dies hat den Vorteil, dass in der Ausschwenkposition der Aufnahmeeinrichtung der Prozessraumes leicht entleerbar ist und insbesondere die Abdeckung nicht verschwenkt wird sowie von der Aufnahmeeinrichtung getrennt ist.

Bevorzugt weist die erfindungsgemässe Vorrichtung eine Schwenkvorrichtung zum Schwenken der Aufnahmeeinrichtung relativ zur Befestigungseinrichtung, insbesondere in die Ausschwenkposition, auf und umfasst vorzugsweise zumindest einen Antrieb sowie ein Getriebe.

Der Antrieb kann als Motor oder manuell im Form einer Kurbel ausgestaltet sein. Im Weiteren kann die Schwenkvorrichtung einen Antrieb, ein, vorzugsweise selbsthemmendes, Schneckengetriebe, einen Zahnriementrieb als Übersetzung und / oder Kombinationen daraus umfassen.

Vorzugsweise besitzen Prozessraumwand und Abdeckung eine Zylinderform, da bei Verwendung eines rotierenden Rührwerks das zu verarbeitende Korn bis zur Wand des Prozessraums erfasst werden kann. Bevorzugt sind zur Verhinderung von Bereiche mit geringer Wendeaktivität an der Innenseite der Prozessraumwand Einbauten installiert. Im Sinne der Erfindung werden unter Einbauten Elemente im Prozessraum verstanden, welche eine Ansammlung von Korn an deren Bereichen verhindern.

Während dem Keimen und Darren wird bevorzugt im Prozessraum ein regelmässiger Luftaustausch ermöglicht, d.h. Luft oder andere Gase können zu- beziehungsweise abgeführt werden können. Vorzugsweise ist eine Leitung für ein Fluid wie Luft oder weitere Gase zur Platte oder von der Platte weg angebracht. Die Platte ist hierbei vorzugsweise durch die Aufnahmeeinrichtung dichtend zur Umgebung auf der dem Prozessraum abgewandten Seite aufgenommen.

Unter einer dichtenden Aufnahme zur Umgebung auf der dem Prozessraum abgewandten Seite wird lediglich eine Abdichtung zur Umgebung verstanden, wobei jedoch Fluide zur Platte mit mindestens einer Öffnung kontrolliert und gesteuert zuführbar und / oder abführbar sind mittels der Fluidleitung.

Insbesondere ergibt sich diese Fluidleitung bis zur Platte mit mindestens einer Öffnung, indem die Aufnahmeeinrichtung als Gehäuse mit einer Hohlkammer ausgestaltet ist und dieses Gehäuse mindestens eine Öffnung zur Fluidzufuhr aufweist, insbesondere zusätzlich zur Öffnung in einer aufgenommenen Platte.

Bevorzugt weist die Vorrichtung eine erste Leitung zur Zufuhr und/oder Abfuhr eines Gases, insbesondere Luft in die Fluidleitung der Aufnahmeeinrichtung auf.

Insbesondere ist also die Leitung zweiteilig ausgestaltet als Fluidleitung und erste Leitung.

Diese Ausgestaltung weist den Vorteil der flexibleren Ausbildung der Fluidzufuhr zur Platte auf in Abhängigkeit vom jeweiligen Anwendungsfall.

Besonders bevorzugt umfasst die Fluidleitung und / oder die erste Leitung einen Abschnitt, insbesondere zur Bildung eines Schwenkarms. Dieser Abschnitt kann beispielsweise in einem Lager der Befestigungseinrichtung angebracht werden, um die Aufnahmeeinrichtung zu der Befestigungseinrichtung zu fixieren.

Dieser Abschnitt der Fluidleitung und / oder der ersten Leitung ist vorzugsweise derart in der Befestigungseinrichtung lagerbar, so dass die Fluidleitung und / oder die erste Leitung im Wesentlichen um die Längsachse des Abschnitts schwenkbar ist. Beispielsweise kann ein Teil des Abschnitts als Luftzufuhrstutzen fungieren. Damit kann die Aufnahmeeinrichtung zur Befestigungseinrichtung mittels des Abschnitts positioniert werden. Bevorzugt ist an dem Lager zur Luftzufuhr der Befestigungseinrichtung ein Luftzufuhrstutzen angebracht ist, an welchem die Fluidleitung und/oder die erste Leitung fixiert werden kann. Der Abschnitt greift in das Lager ein und ist dadurch fluidleitend mit dem Luftzufuhrstutzen verbunden und ist dadurch sowohl zur Befestigungseinrichtung wie auch zu einer Luftzufuhrleitung beziehungsweise ersten Leitung schwenkbar. Die Luftzufuhrleitung und/oder erste Leitung schwenkt also nicht bei jeder Entleerung mit, mit dem Vorteil, dass diese Leitung weniger mechanisch beansprucht wird und sich dessen Lebensdauer verlängert. Hierfür wird beispielsweise der Abschnitt mit einer Rutschkupplung versehen.

Im Weiteren können die Prozessraumwand und/oder die Abdeckung aus Kunststoff, insbesondere Plexiglas, und / oder Glas bestehen, wobei diese bevorzugt transparent sind. Damit wird mit dem Auge ein Überwachen des Prozesses ermöglicht. Beispielsweise ist der Füllstand an zu verarbeitendem Korn sowie Wasser ersichtlich. Bei einer Prozessraumwand und / oder Abdeckung aus Kunststoff und / oder Glas besitzt die erfindungsgemässe Vorrichtung, insbesondere der Prozessraum eine geringe Wärmekapazität. Dies hat den Vorteil, dass nach einem Darrschritt eine Abkühlung des zu verarbeitenden Korn beschleunigt wird.

Vorzugsweise ist an die Prozessraumwand und / oder die Abdeckung mindestens eine Isoliermatte anbringbar, welche insbesondere während des Darrschritts die Wärmeleitfähigkeit zwischen Prozessraum und Umgebung durch die Prozessraumwand und / oder Abdeckung reduziert beziehungsweise deren Wärmekapazität des Prozessraums erhöht und nach dem Darrschritt wieder entfernt werden kann. Vorzugsweise dient Neopren als Isoliermaterial für die Isoliermatte. Dies hat den Vorteil, dass der Energieverbrauch während des Darrschritts reduziert wird.

Sollte es erwünscht sein, dass die Vorgänge im Prozessraum unter Lichtabschluss erfolgen, so können Prozessraumwand und Abdeckung auch aus Metall, insbesondere Stahl, bestehen. Prozessraumwand und Abdeckung können im Weiteren aus beliebigen Kombinationen von, insbesondere transparentem, Kunststoff und Metall bestehen.

Die derzeit bevorzugte Materialkombination ist eine Prozessraumwand/Abdeckung aus Plexiglas mit Neopren als Isoliermaterial.

Bevorzugt ist die Abdeckung fluidleitend mit einer zweiten Leitung zur Zufuhr und / oder Abfuhr eines Gases, insbesondere Luft, verbunden.

Im Weiteren ist vorzugsweise die Abdeckung bei axialer Verschiebung relativ zur Prozessraumwand bei zumindest abschnittsweiser Verschiebung bei bestimmungsgemässem Gebrauch fluidleitend mit der Befestigungseinrichtung, insbesondere auf der Oberseite der Befestigungseinrichtung, mittels der zweiten Leitung verbunden. Bevorzugt ist die zweite Leitung ein Luftabfuhrrohr und in die Befestigungseinrichtung einführbar.

Bevorzugt befindet sich bei axialer Verschiebung der Abdeckung relativ zur Prozessraumwand das eine Ende eines Luftabfuhrrohrs bei Vertikalstellung der Aufnahmeeinrichtung bevorzugt im oberen Drittel, noch bevorzugter im oberen Viertel, am meisten bevorzugt im oberen Fünftel der Abdeckung.

Besonders bevorzugt ist das Luftabfuhrrohr dichtend mit der Abdeckung insbesondere ohne Kontakt zur Befestigungseinrichtung verbunden, womit das der Abdeckung abgewandte Ende des Luftabfuhrrohrs als Luftabfuhrstutzen fungiert und einen flexiblen Anschluss zur Aufnahme eines Schlauchs darstellt.

Alternativ kann hierzu beispielsweise anstelle eines Luftabfuhrrohrs ein elastischer Schlauch oder auch ein Teleskoprohr an der Befestigungseinrichtung angebracht sein, um den apparativen Aufwand zu reduzieren als kostengünstige Lösung. Es ist denkbar, an dem elastischen Schlauch oder auch das Teleskoprohr zusätzlich eine Energiezuführung für das Rührwerk anzubringen. Zudem können am elastischen Schlauch Kabel für allfällig mit der erfindungsgemässen Vorrichtung versehene Sensoren angebracht sein.

Vorzugsweise ist zumindest ein Anschluss für Gas, insbesondere ein Luftabfuhrstutzen und / oder ein Luftzufuhrstutzen, fest an der Befestigungseinrichtung angeordnet, insbesondere um Undichtigkeiten zu verhindern.

Bevorzugt ist an der Abdeckung ein Rührwerk zum Antreiben von mindestens einem Rührwerkzeug zur Umwälzung des Korns im Prozessraum angebracht, welches insbesondere mit einem Antriebsmotor ausgestattet ist. Am Rührwerk kann hier beispielsweise zumindest ein Rührwerkzeug, insbesondere Wendespiralen oder Wendeschnecken, angeordnet sein.

Vorzugsweise erstreckt sich bei einer relativ zur Prozessraumwand axial verschiebbaren Abdeckung dessen Mantelfläche, die als Abdeckelement der Rührwerkzeuge ausgestaltet ist, mindestens über die Länge der Rührwerkzeuge als Schutzvorkehrung für den Anwender, insbesondere beim Trennen der Abdeckung von der Prozessraumwand.

Bevorzugt ist das Abdeckelement entlang mindestens einer Achse im Wesentlichen parallel zu den Rührwerkzeugen aufklappbar. Dadurch können die Rührwerkzeuge erleichtert von der Abdeckung entfernt werden.

Im Weiteren kann alternativ ein insbesondere als Aussengitter ausgestaltetes Abdeckelement, welche sich mindestens über die Länge der Rührwerkzeuge erstreckt, an der Befestigungseinrichtung angebracht sein.

Bei der Ausgestaltung des an der Befestigungseinrichtung angebrachten Aussengitter kann das Luftabfuhrrohr seitlich durch eine Öffnung im Aussengitter weggeführt sein oder ein Teil des Aussengitters klappbar angeordnet sein. Dies hat den Vorteil, dass durch das Luftabfuhrrohr der Zugang insbesondere zum Prozessraum der Vorrichtung nicht versperrt wird.

Alternativ kann das Luftabfuhrrohr, insbesondere vertikal angeordnet, durch eine Öffnung zwischen den Rührwerkzeugen und der Abdeckung geführt sein. Dadurch kann bei geeigneter Anordnung des Luftabfuhrrohrs beim Trennen der Abdeckung von der Prozessraumwand auf ein Aufklappen des Aussengitters verzichtet werden.

Besonders bevorzugt ist das Rührwerk an der Aufnahmeeinrichtung angebracht. Vorzugsweise sind die Rührwerkzeuge, insbesondere die Wendespiralen oder Wendeschnecken, durch Rührwerksöffnungen in der Platte mit mindestens einer Öffnung über eine lösbare Verbindung, insbesondere anhand einer Bajonettverschlusses, in einem Rührwerkantriebsgehäuse auf der dem Prozessraum abgewandten Seite an der Aufnahmeeinrichtung gelagert, wobei der Antriebsmotor bevorzugt seitlich benachbart zur Prozessraumwand angebracht ist.

Auf der dem Prozessraum abgewandten Seite sind die Wendespiralen oder Wendeschnecken über eine Kraftübertragungseinrichtung, vorzugsweise einen doppelseitigen, Zahnriementrieb oder eine Kette, mit dem Antriebsmotor verbunden. Bevorzugt sind die Steckverbindung, der Zahnriementrieb oder Kette in einem Rührwerksantriebsgehäuse dichtend gegenüber Fluiden ausgebildet.

Bei derartiger Lagerung der Wendespiralen oder Wendeschnecken in einem Rührwerkantriebsgehäuse kann durch geeignete Anordnung des Rührwerks, insbesondere des Antriebsmotors, die Bauhöhe der erfindungsgemässen Vorrichtung gering gehalten werden. In einer solchen Anordnung stellt gleichzeitig die Prozessraumwand eine Schutzvorkehrung für den Anwender während des Betriebs gegenüber den Rührwerkzeugen dar. Als weiterer Vorteil können die Wendespiralen oder Wendeschnecken aufgrund der lösbaren Verbindung zu jedem beliebigen Prozessschritt entfernt werden, beispielsweise nach dem Keimschritt, da diese während des Darrschritts eher nachteilig sind. Insbesondere wird durch die Möglichkeit der Entfernbarkeit der Wendespiralen oder Wendeschnecken eine Cleaning-in-Place-Reinigung (d.h. Reinigung vor Ort) ohne wesentliche Demontage der Vorrichtung beispielsweise durch das Anbringen von Reinigungsdüsen in der Prozessraumwand erleichtert.

Beispielsweise kann das an der Abdeckung angeordnete Rührwerk durch vertikale Verschiebung der Abdeckung wie oben beschrieben relativ zum Prozessraum positioniert werden. Dies hat den Vorteil, dass insbesondere bei dichtender, axialer Verschiebung der Abdeckung die Behandlung des Korns unter Abdichtung gegenüber der Umgebung erfolgen kann und gleichzeitig das Korn mittels Positionieren der Abdeckung und damit des Rührwerks mit dem Rührwerk bearbeitbar ist.

Als Sicherheitsmassnahme kann an der Abdeckung eine Sicherheitseinrichtung, insbesondere ein Sicherheitsschalter, angebracht sein, welcher bei geöffneter Abdeckung den Antriebsmotor des Rührwerks automatisch ausschaltet. Gegebenenfalls kann ein weiterer Sicherheitsschalter vorgesehen sein, welcher den Antriebsmotor des Rührwerks beim Schwenken der Aufnahmeeinrichtung automatisch ausschaltet. Im Weiteren kann bei Öffnen des Abdeckelements ein weiterer Sicherheitsschalter vorgesehen sein.

Im Weiteren ist bevorzugt eine Öffnung zur Zuführung von Wasser und zu verarbeitendem Korn an der Abdeckung, insbesondere an dessen Oberseite, angebracht. Vorzugsweise ist diese Öffnung zur Zuführung verschliessbar, was abhängig vom jeweiligen Prozessschritt vorteilhaft ist. Diese Öffnung kann auch zur Luftabfuhr dienen.

Da die Aufnahmeeinrichtung üblicherweise während des Prozesses in Vertikalstellung unter dem Prozessraum angeordnet ist, ist es vorteilhaft, hier eine verschliessbare Ablassöffnung, insbesondere einen Wasserablasshahn, anzuordnen. Zudem kann an der Aufnahmeeinrichtung eine Reinigungsöffnung angebracht werden.

Die erfindungsgemässe Vorrichtung kann zudem eine Messsensorik aufweisen, welche es erlaubt, Betriebsparameter zu messen, insbesondere für Temperatur und Volumenstrom. Bevorzugt wird zumindest ein Temperatursensor und insbesondere mehrere abschnittweise beabstandet in axialer Richtung in der Prozessraumwand zur Messung der Temperatur im Prozessraum angebracht. Vorzugsweise sind Temperatursensor und / oder ein Sensor zur Messung des Volumenstroms eines Fluids am Luftabfuhrrohr anbringbar.

Die erfindungsgemässe Vorrichtung kann im Weiteren ein Aggregat aufweisen, welches in die Vorrichtung integriert und / oder modular mit der Vorrichtung verbindbar ist. Vorzugsweise umfasst das Aggregat zumindest eine der folgenden Einrichtungen oder beliebige Kombinationen daraus: eine insbesondere steuerbare Ventilation; eine Einrichtung zum Heizen und / oder Kühlen; eine insbesondere steuerbare Einrichtung zur Zufuhr von Dampf; eine insbesondere steuerbare Einrichtung zur Zufuhr von Wasser; eine insbesondere steuerbare Einrichtung zur Umluftführung im Kreislauf.

Ein weiterer Aspekt der Erfindung bezieht sich auf ein Verfahren, welches insbesondere anhand der erfindungsgemässen Vorrichtung durchgeführt wird. Zunächst erfolgt ein Befüllen eines Prozessraums, gebildet aus einer Platte mit mindestens einer Öffnung, einer Prozessraumwand und einer Abdeckung, welche von einer an und / oder in einer Befestigungseinrichtung angebrachten Aufnahmeeinrichtung aufgenommen sind, mit Korn und Wasser. Die Abdeckung und die Prozessraumwand sind bei bestimmungsgemässem Gebrauch im Wesentlichen dichtend zueinander ausgebildet. In einem anschliessenden Prozessschritt wird das Korn durch das Wasser eingeweicht. Insbesondere nach Erreichen eines gewünschten Wassergehalts des zu verarbeitenden Korns kann das Wasser abgelassen werden. Anschliessend erfolgt ein Keimungsschritt, wobei insbesondere das eingeweichte Korn durch eine Fluidleitung unter der Platte mit mindestens einer Öffnung belüftet wird. Anschliessend kann optional als dritter Prozessschritt ein Darrschritt erfolgen, in welchem das zu verarbeitende Korn vorzugsweise bis zu einer Feuchtigkeit von 2 bis 14wt% getrocknet wird. Anschliessend kann optional als weiterer Prozessschritt nach dem Keimen und / oder Darren das Korn unter Luftabschluss zur Umgebung fermentieren. Nebst Braugerste als zu verarbeitendes Korn kann beispielsweise auch Wasser, Roggen und Malz zur Herstellung des Getränks Kwas, ein kohlensäurehaltiges Erfrischungsgetränk, in der erfindungsgemässen Vorrichtung, beispielsweise in Gegenwart von Milchsäurebakterien beziehungsweise Laktobazillen fermentiert werden. Darren und Fermentieren können in deren zeitlichen Reihenfolge austauschbar sein, womit das zu verarbeitende Korn zunächst fermentiert und anschliessend gedarrt wird. Anschliessend erfolgt ein Entleeren des in den vorherigen Schritten behandelten Korns aus dem geschlossenen Prozessraum. Dieser Entleerungsschritt erfolgt mittels Öffnen des Prozessraums und Ausschwenken der Aufnahmeeinrichtung relativ zur Befestigungseinrichtung und / oder Öffnen von mindestens zwei insbesondere an einer gemeinsamen Achse bei bestimmungsgemässem Gebrauch in Richtung der Schwerkraft klappbaren Teilen der Platte.

Anhand zumindest eines Rührwerkzeugs kann das zu verarbeitende Korn umgewälzt, insbesondere von der Platte nach oben transportiert, und aufgelockert werden, vorzugsweise bei einer Drehzahl bevorzugt grösser als 0 bis 16 Umdrehungen pro Minute, noch bevorzugter grösser als 0 bis 10, am meisten bevorzugt grösser als 0 bis 6. Eine schonende Umwälzung bei geringer Drehzahl ist vorteilhaft, da ein intakter Keimling mit Trieb während des Darrens wirksamer getrocknet wird.

Ein weiterer Aspekt der Erfindung bezieht sich auf eine Verwendung der oben beschriebenen Vorrichtung zum Weichen, Keimen, Darren, Fermentieren und/oder Kombinationen daraus von Korn, insbesondere gemäss dem oben beschriebenen Verfahren.

Die Erfindung wird nachfolgend anhand der Zeichnungen näher erläutert, ohne die Erfindung auf diese zu beschränken. Es zeigen:
- Figur 1:: Perspektivische Darstellung einer bevorzugten Variante einer erfindungsgemässen Vorrichtung
- Figur 2:: Perspektivische Darstellung der erfindungsgemässen Vorrichtung bei aufgeklappter Abdeckung
- Figur 3:: Perspektivische Darstellung der erfindungsgemässen Vorrichtung in Ausschwenkposition
- Figur 4:: Perspektivische Darstellung der Befestigungseinrichtung der erfindungsgemässen Vorrichtung
- Figur 5:: Perspektivische Darstellung der Aufnahmeeinrichtung der erfindungsgemässen Vorrichtung
- Figur 6:: Darstellung der Aufnahmeeinrichtung mit Platte
- Figur 7:: Skizzierte Darstellung der Verankerung der Wendeschnecken im Rührwerksantriebsgehäuse
- Figur 8:: Perspektivische Darstellung eines offenen Prozessraums mit Wendeschnecken und Einbauten
- Figur 9:: Perspektivische Darstellung der erfindungsgemässen Vorrichtung mit offenem Rührwerkantriebsgehäuse
- Figur 10a:: Skizzierte Darstellung einer Variante einer direkten Ausschwenkvorrichtung der Prozessraumwand zur Abdeckung
- Figur 10b:: Skizzierte Darstellung einer Variante einer indirekten Ausschwenkvorrichtung der Prozessraumwand zur Abdeckung
- Figur 11:: Perspektivische Darstellung einer zweiten Variante einer erfindungsgemässen Vorrichtung mit der Gasdruckfederung der Abdeckung
- Figur 12:: Perspektivische Darstellung einer dritten Variante einer erfindungsgemässen Vorrichtung mit Doppelagerung der Aufnahmeeinrichtung
- Figur 13:: Perspektivische Darstellung einer vierten Variante einer erfindungsgemässen Vorrichtung
- Figur 14:: Seitenansicht einer erfindungsgemässen Vorrichtung mit geschlossenem Prozessraum
- Figur 15:: Seitenansicht einer erfindungsgemässen Vorrichtung mit offenem Prozessraum mit Dichtung an Prozessraumwand
- Figur 16:: Seitenansicht einer erfindungsgemässen Vorrichtung mit offenem Prozessraum mit Dichtung an Abdeckung
- Figur 17:: Perspektivische Darstellung einer fünften Variante einer erfindungsgemässen Vorrichtung
- Figur 18:: Skizzierte Ansicht einer geschlossenen Platte bei in Richtung der Schwerkraft klappbaren Teilen in einer erfindungsgemässen Vorrichtung
- Figur 19:: Skizzierte Ansicht einer geöffneten Platte bei in Richtung der Schwerkraft klappbaren Teilen in einer erfindungsgemässen Vorrichtung
- Figur 20:: Skizzierte Ansicht einer Aufhängeeinrichtung der in Richtung der Schwerkraft klappbaren Teile der Platte in einer erfindungsgemässen Vorrichtung
- Figur 21:: Perspektivische Ansicht einer erfindungsgemässen Vorrichtung mit aufklappbaren Abdeckelementen der Rührwerkzeuge
- Figur 22:: Perspektivische Ansicht einer erfindungsgemässen Vorrichtung mit einem Aussengitter sowie einem horizontal angeordneten Abfuhrrohr
- Figur 23:: Perspektivische Ansicht einer erfindungsgemässen Vorrichtung mit einem Aussengitter sowie einem vertikal angeordneten Abfuhrrohr

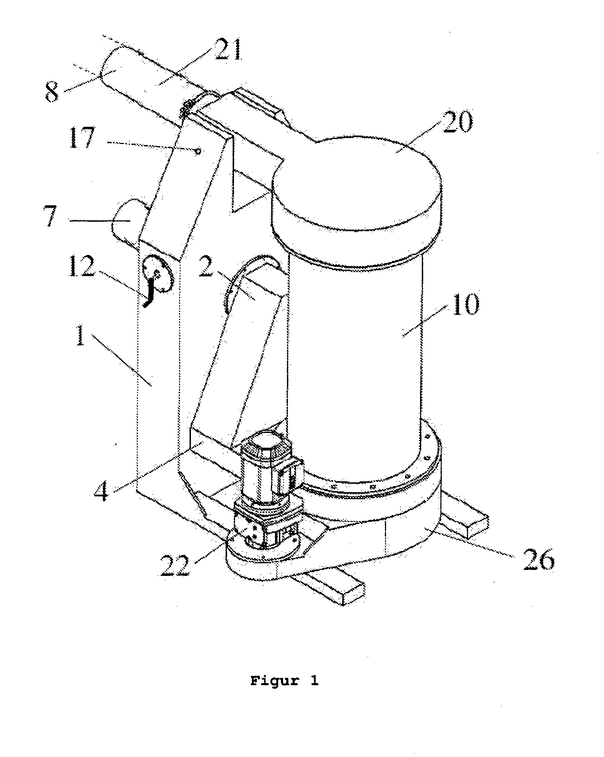

Figur 1 zeigt eine erste Variante der erfindungsgemässen Vorrichtung in perspektivischer Darstellung. Figur 1 zeigt eine Aufnahmeeinrichtung 2, welche in einer Befestigungseinrichtung 1 aufgenommen ist und einen Schwenkarm 4 aufweist. Die Aufnahmeeinrichtung 2 weist auf der dem Prozessraum abgewandten Seite einen Luftzufuhrstutzen 7 auf. Eine Abdeckung 20 ist an einer Prozessraumwand 10 angebracht, wobei die Abdeckung 20 direkt mit einem Luftabfuhrrohr 21 verbunden ist. Das Ende des Luftabfuhrrohrs 21 fungiert hierbei als Luftabfuhrstutzen 8. Anhand eines Lagers 17 ist die Abdeckung 20 in der Befestigungseinrichtung 1 aufgenommen. Im Weiteren zeigt Figur 1 ein Rührwerkantriebsgehäuse 26 mit dem Rührwerk 22.

Mittels Kurbel 12 ist die Prozessraumwand 10 zur Befestigungseinrichtung 20 manuell ausschwenkbar in die Ausschenkposition beziehungsweise zurück in die Vertikalstellung.

Von hier an und im Folgenden bezeichnen gleiche Referenzzeichen gleiche Komponenten in den Figuren.

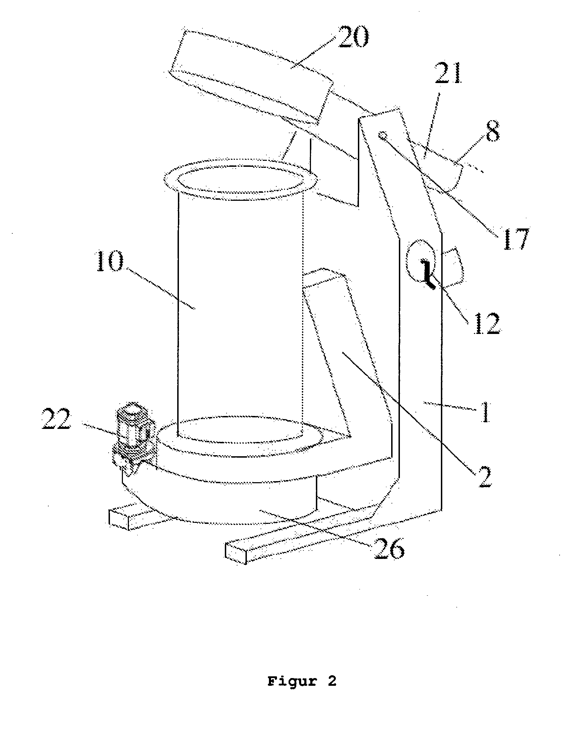

Figur 2 zeigt eine perspektivische Darstellung der erfindungsgemässen Vorrichtung gemäss Figur 1 bei aufgeklappter Abdeckung 20. In dieser Position ist durch Betätigung der Kurbel 12 die erfindungsgemässe Vorrichtung in die Ausschwenkposition schwenkbar.

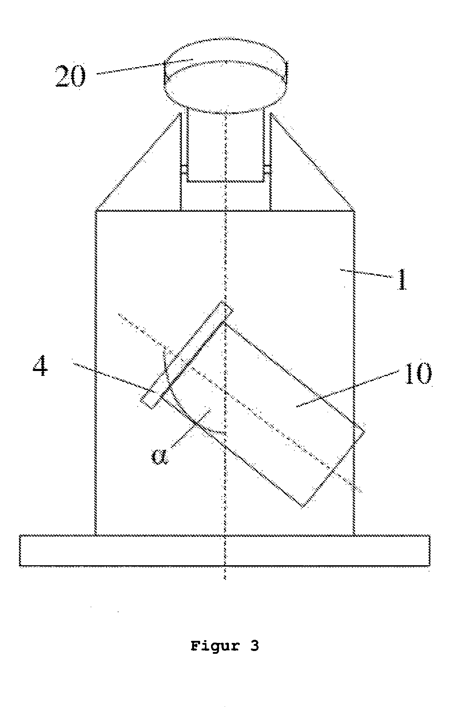

Figur 3 zeigt schematisch die erfindungsgemässe Vorrichtung gemäss Figur 1 in einer Ausschwenkposition. Die Abdeckung 20 ist hier relativ zur Prozessraumwand 10 aufgeklappt und die Prozessraumwand 10 mit Schwenkarm 4 zur Abdeckung 20 im Uhrzeigersinn in einem Winkel α von etwa 125° zu einer Vertikalstellung der Aufnahmeeinrichtung 2 ausgeschwenkt.

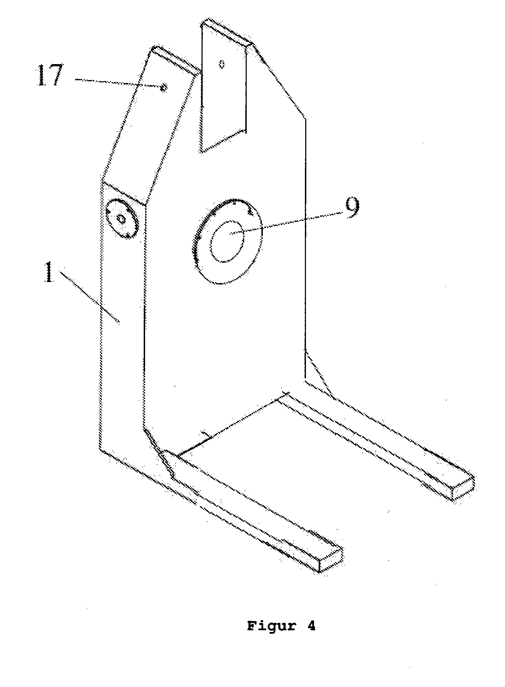

Figur 4 zeigt die Befestigungseinrichtung 1, an welcher ein Lager 9 zur Aufnahme der Aufnahmeeinrichtung (nicht gezeigt in Figur 4) angeordnet ist.

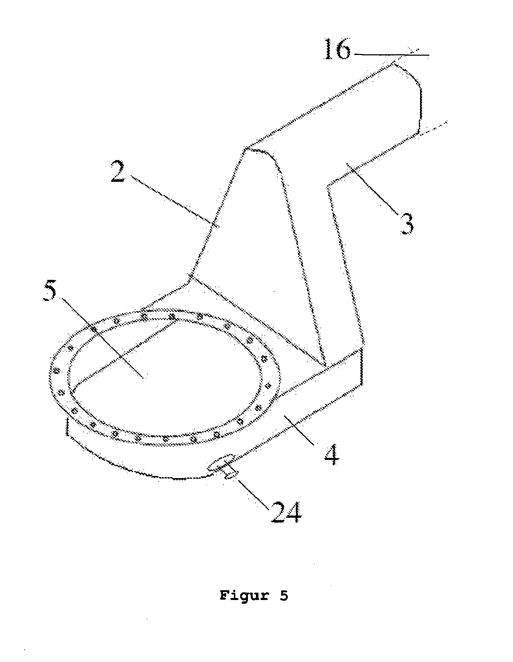

Figur 5 zeigt die Aufnahmeeinrichtung 2, welche aufgebaut ist aus einem Schwenkarm 4 und einem Abschnitt 3. Figur 3 zeigt zudem eine Hohlkammer 5, d.h. ein Fluidleitung, der Aufnahmeeinrichtung 2. Im Weiteren ist in Figur 3 eine erste Leitung 16 angedeutet, welche fluidleitend mit der Aufnahmeeinrichtung 2 verbunden ist. Figur 5 zeigt im Weiteren eine Ablassöffnung 24.

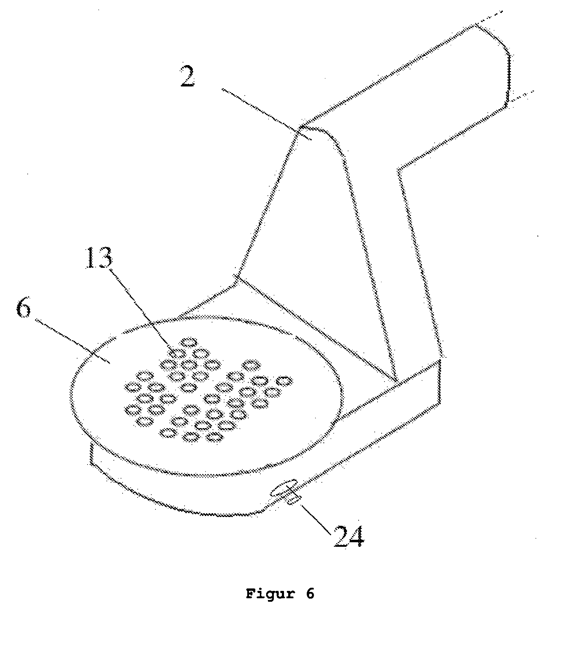

Figur 6 zeigt die Aufnahmeeinrichtung 2, wobei über der Hohlkammer 5 (nicht ersichtlich in Figur 6) die Platte 6 mit mindestens einer Öffnung 13 in der Aufnahmeeinrichtung aufgenommen ist.

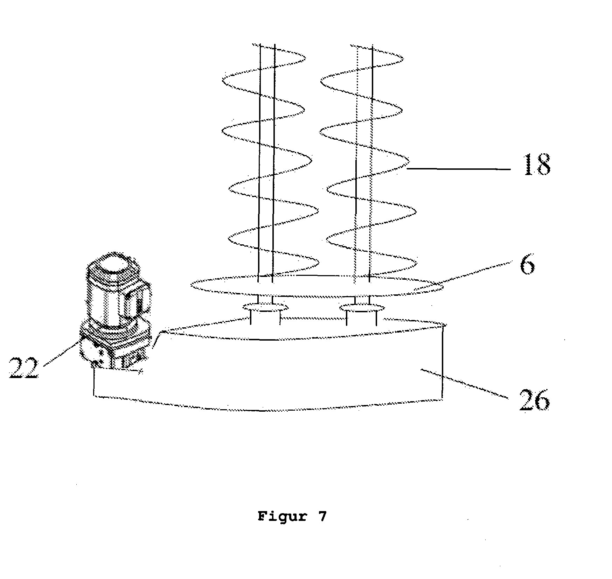

Figur 7 zeigt das Rührwerkantriebsgehäuse 26 der erfindungsgemäsen Vorrichtung gemäss Figur 1, wobei Wendeschnecken 18 über Rührwerksöffnungen in der Platte 6 im Rührwerkantriebsgehäuse 26 gelagert sind. Zudem zeigt Figur 7 das Rührwerk 22.

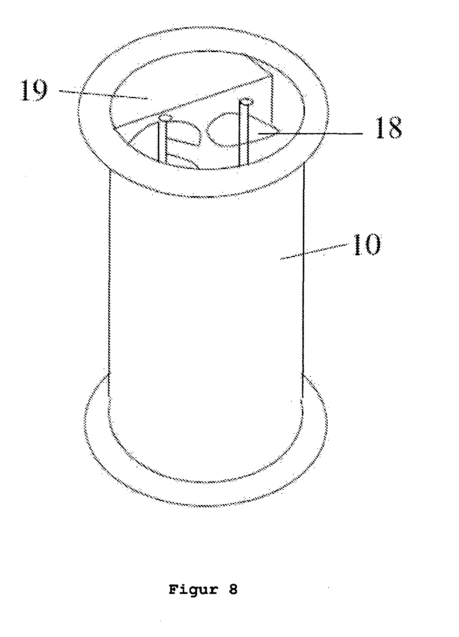

Figur 8 zeigt eine perspektivische Darstellung eines offenen Prozessraums innerhalb der Prozessraumwand 10, wobei zwei Wendeschnecken 18 darin gelagert sind sowie Einbauten 19 ersichtlich sind.

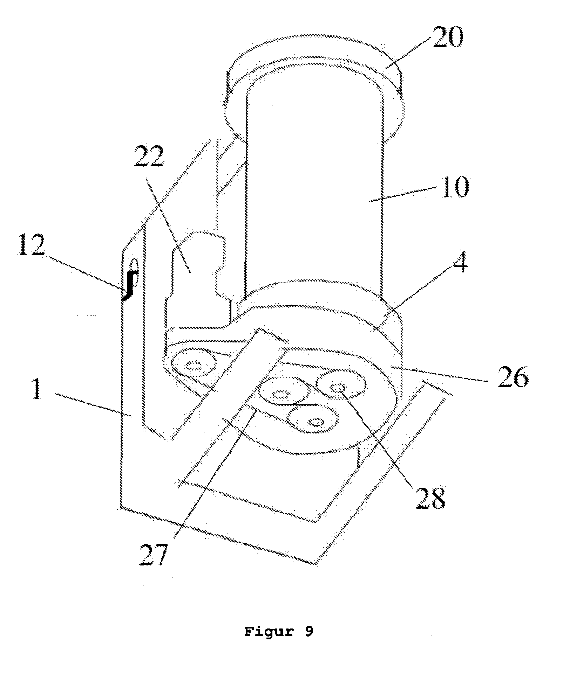

Figur 9 zeigt eine perspektivische Darstellung der erfindungsgemässen Vorrichtung gemäss Figur 1. Das Rührwerkantriebsgehäuse 26 ist offen ohne eine untere Abdeckung und zeigt die Lagerung des dem Prozessraum abgewandten Endes der Wendeschnecken (nicht ersichtlich in Figur 9) in Steckverbindungen 28. Diese Steckverbindungen sind rotierbar und verzahnt mit einem Zahnriementrieb 27, welcher wiederum mit dem Antriebsmotor des Rührwerk 22 verzahnt und angetrieben ist.

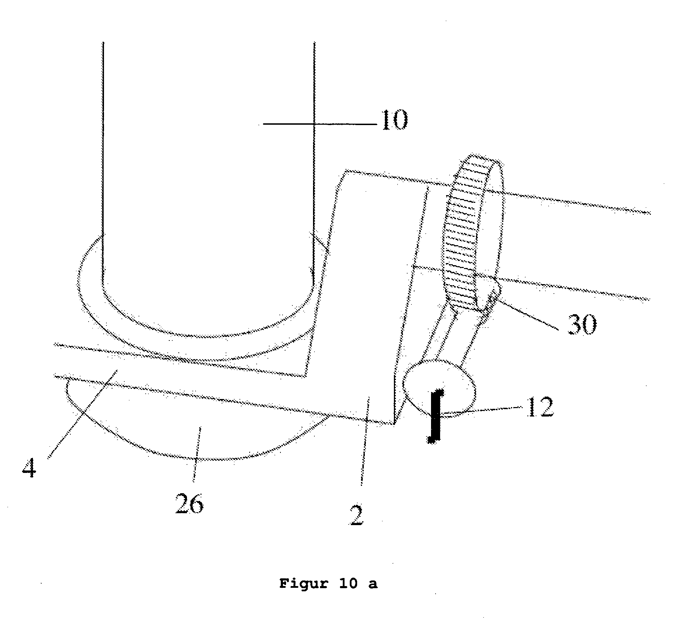

Figur 10a zeigt eine schematische Darstellung einer direkten Verbindung der Kurbel 12 mit einem Schneckengetriebe 30. Ein Zahnrad des Schneckengetriebes 30 ist fest verbunden mit der Aufnahmeeinrichtung 2 und schwenkbar durch Betätigung der Kurbel 14.

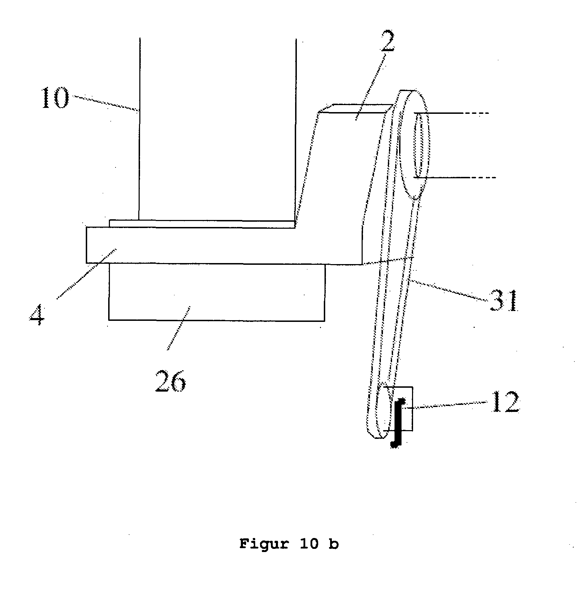

Figur 10b zeigt eine skizzierte Darstellung in der Befestigungseinrichtung 1 (nicht ersichtlich in Figur 10b) einer indirekten Verbindung der Kurbel 12 über einen Zahnriementrieb 31 mit der Aufnahmeeinrichtung 2. Das Schneckengetriebe (nicht ersichtlich in Figur 10b) ist direkt mit der Kurbel 12 verbunden.

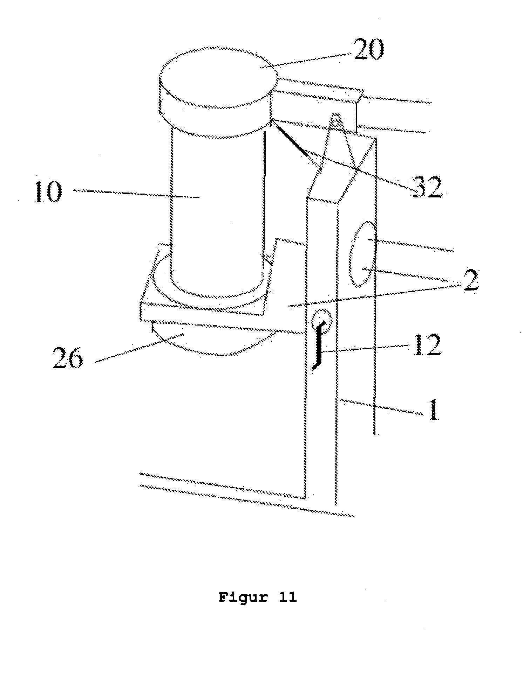

Figur 11 zeigt eine zweite Variante der erfindungsgemässen Vorrichtung, bei welcher zwischen der Abdeckung 20 und der Befestigungseinrichtung 1 eine Gasdruckfeder 32 angebracht ist.

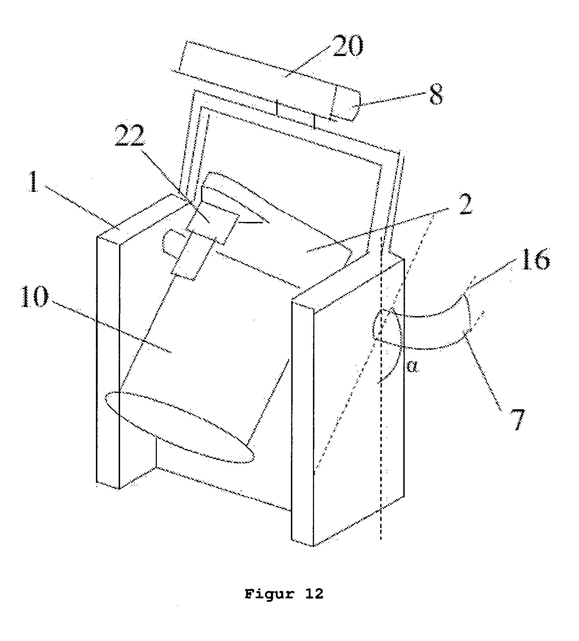

Figur 12 zeigt eine dritte Variante einer erfindungsgemässen Vorrichtung in perspektivischer Darstellung bei ausgeschwenkter Prozessraumwand 10 zur Abdeckung 20, wobei die Aufnahmeeinrichtung 2 über zwei Lager 9 (nicht ersichtlich in Figur 12) an der Befestigungseinrichtung 1 angebracht ist. Ein Rohrabschnitt (nicht ersichtlich in Figur 12) fungiert als Fluidleitung und ist mit einem Luftzufuhrstutzen 7 versehen.

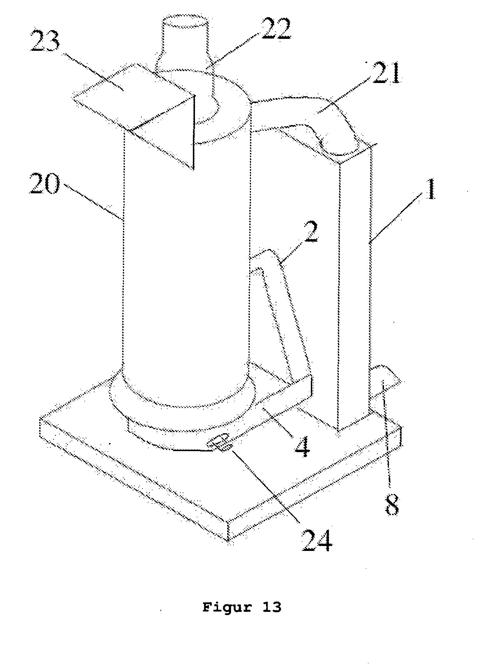

Figur 13 zeigt eine vierte Variante einer erfindungsgemässen Vorrichtung in perspektivischer Darstellung. Wie in Figur 13 gezeigt, ist eine Aufnahmeeinrichtung 2 in einer Befestigungseinrichtung 1 aufgenommen, welche einen Schwenkarm 4 aufweist. In der Aufnahmeeinrichtung 2 ist eine Platte mit mindestens einer Öffnung aufgenommen (nicht ersichtlich in Figur 13). Im Weiteren ist auf der Aufnahmeeinrichtung 2 mit der Platte eine Prozessraumwand angebracht (nicht ersichtlich in Figur 13). Eine Abdeckung 20 ist an der Aufnahmeeinrichtung 2 angebracht. Im Weiteren ist ein Luftabfuhrrohr 21 ausgehend vom oberen Bereich der Abdeckung 20 zur Oberseite der Befestigungseinrichtung 1 gezeigt. Im Weiteren ist an der Oberseite der Abdeckung 20 der obere Teil eines Rührwerks 22 ersichtlich. Zudem ist im oberen Bereich der Abdeckung 20 benachbart zum Rührwerk 22 eine Öffnung 23 zur Zuführung von zu verarbeitendem Korn und Wasser gezeigt. Im Weiteren zeigt Figur 1 eine Ablassöffnung 24 zum Ablassen unter anderem von Wasser. An der Befestigungseinrichtung 1 ist im Weiteren ein Luftabfuhrstutzen 8 ersichtlich.

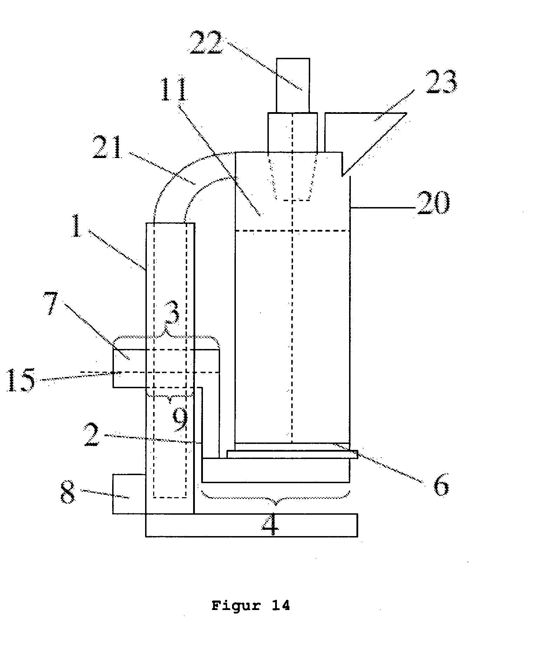

Figur 14 zeigt die Befestigungseinrichtung 1 mit der daran angebrachten Aufnahmeeinrichtung 2. In Figur 14 ist ersichtlich, wie die Aufnahmeeinrichtung 2 durch dessen Rohrabschnitt 3 über das Lager 9 an der Befestigungseinrichtung 1 angebracht ist und ein überstehender Teil des Rohrabschnitts 3 als Luftzufuhrstutzen 7 fungiert. Zudem ist der Schwenkarm 4 der Aufnahmeeinrichtung 2 gezeigt, auf welchem die Platte 6 und die Prozessraumwand angebracht sind. Die Abdeckung 20 ist bis zum unteren Ende der Prozessraumwand geschoben und bildet damit axial dichtend einen Prozessraum 11. Zudem wird gezeigt, wie das Ende des Luftabfuhrrohrs 21 bis auf Höhe des Luftabfuhrstutzens 8 in die Befestigungseinrichtung 1 verschoben ist.

Die Öffnung 23 zur Zuführung von zu behandelndem Korn und Wasser sowie das Rührwerk 22 sind im oberen Bereich der Abdeckung 20 ersichtlich. Zudem ist gezeigt, wie das untere Ende des Rührwerk 22 bei geschlossenem Prozessraum bis nahe an die Platte 6 geführt werden kann.

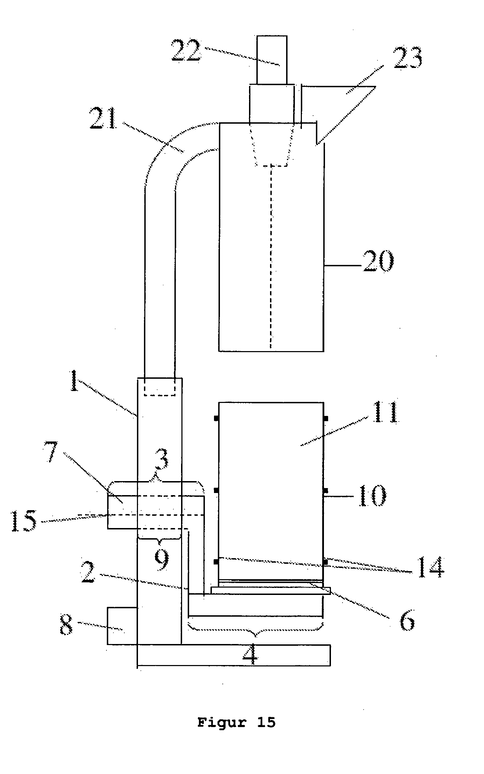

Figur 15 zeigt analog zu Figur 14, wie die Aufnahmeeinrichtung 2 über dessen Abschnitt 3 im Lager 9 der Befestigungseinrichtung 1 angebracht ist und einen Luftzufuhrstutzen 7 bildet. Im Weiteren ist gezeigt, wie die Abdeckung 20 relativ zur Prozessraumwand 10 verschoben und getrennt ist und damit einen offenen Prozessraum 11 bildet. Gleichzeitig ist erkennbar, wie das Ende des Luftabfuhrrohrs 21 zur Oberseite der Befestigungseinrichtung 1 verschoben ist. Das dem Prozessraum 11 zugewandte Ende des Rührwerks 22 ist nicht in den Prozessraum 11 eingeführt. In dieser Ausschwenkposition kann die Einheit aus Befestigungseinrichtung 2, Platte 6 und Prozessraumwand 10 um die Längsachse 15 des Abschnitts 3 rotiert und damit das verarbeitete Korn aus dem Prozessraum 11 entleert werden. Zudem sind in Figur 7 drei in Umfangsrichtung ausgebildete Dichtungen 14 gezeigt, welche abschnittweise in axialer Richtung auf der Aussenseite des Prozessraums 10 angebracht sind.

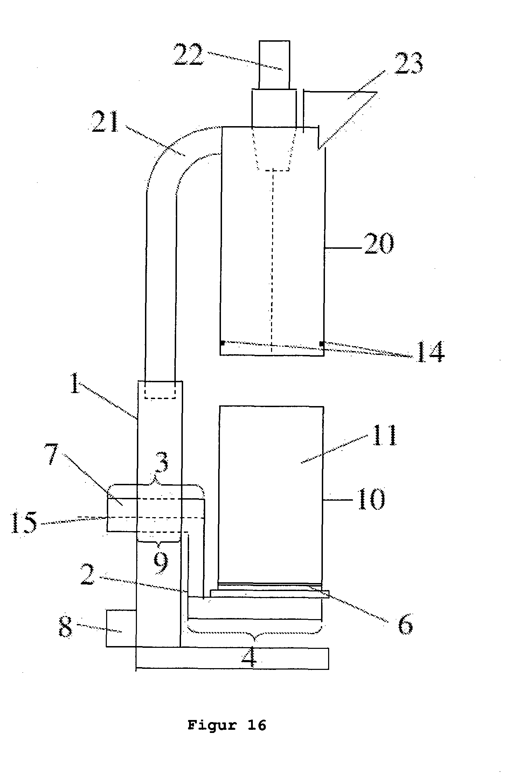

Figur 16 zeigt analog zu Figur 14 die Abdeckung 20 relativ zur Prozessraum 10 verschoben mit einem offenen Prozessraum 11. Zudem ist in Figur 8 eine in Umfangsrichtung ausgebildete Dichtung 14 gezeigt, welche abschnittsweise in axialer Richtung auf der Innenseite der Abdeckung 20 angebracht sind.

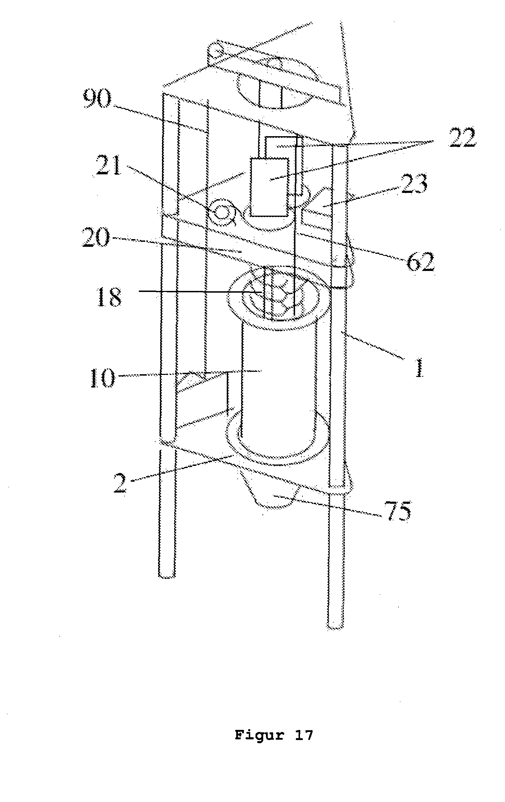

Figur 17 zeigt eine fünfte Variante einer erfindungsgemässen Vorrichtung in perspektivischer Darstellung. Figur 17 zeigt eine in Abfuhrrichtung konusförmig verlaufende Aufnahmeeinrichtung 2, welche an die Befestigungseinrichtung 1 angebracht ist. Figur 17 zeigt im Weiteren, wie eine Prozessraumwand 10 von der Aufnahmeeinrichtung 2 aufgenommen ist. Eine Abdeckung 20 für die Prozessraumwand 10 ist gezeigt zum Schliessen des Prozessraums. An der Abdeckung ist ein Rührwerk 22 mit zwei Antriebsmotoren angebracht, in welches zwei Wendeschnecken 18 gelagert sind. Im Weiteren ist an der Abdeckung 20 ein Luftabfuhrrohr 21 sowie Öffnung 23 zur Zuführung von Korn und Wasser ersichtlich. Im Weiteren zeigt Figur 17 eine Hebevorrichtung 90 für das Rührwerk 22. Im Weiteren zeigt Figur 17 an der Aufnahmeeinrichtung 2 eine Öffnung 75 zur Abfuhr des verarbeiteten Korns und Wasser.

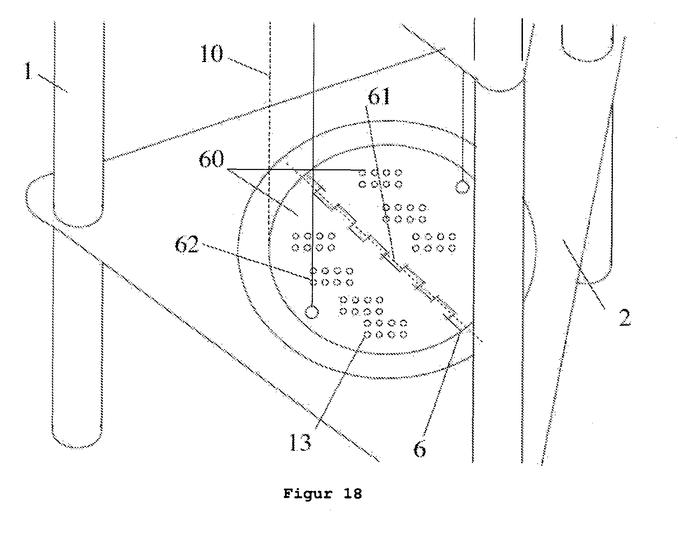

Figur 18 zeigt eine skizzierte Ansicht einer geschlossenen Platte 6 mit mindestens einer Öffnung 13 einer erfindungsgemässen Vorrichtung, welche zwei in Richtung der Schwerkraft zu einer Achse 61 klappbare Teile 60 umfasst. Die zwei klappbaren Teile sind mittels einer Aufhängeeinrichtung 62 geschlossen. Im Weiteren ist die Position der Prozessraumwand 10 angedeutet.

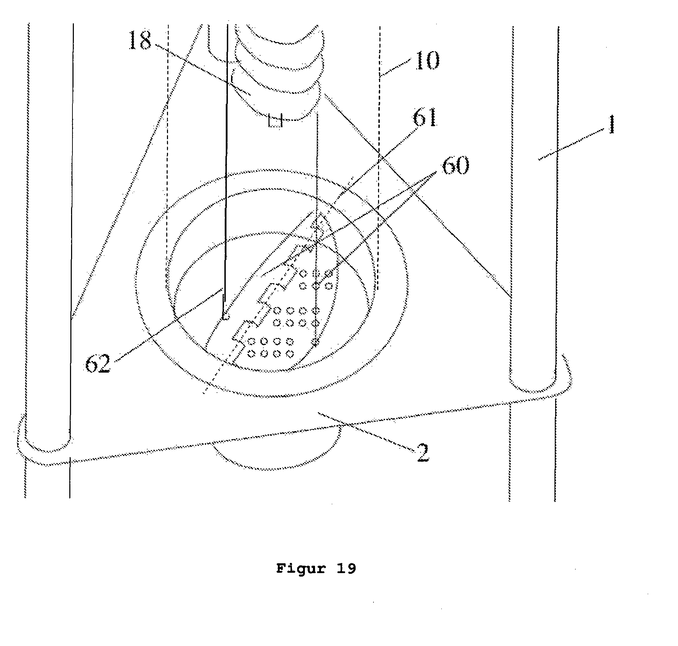

Figur 19 zeigt eine skizzierte Ansicht einer geöffneten Platte 6 einer erfindungsgemässen Vorrichtung, wobei die Teile 60 zur Achse 61 nach unten in Schwerkraftrichtung geklappt sind.

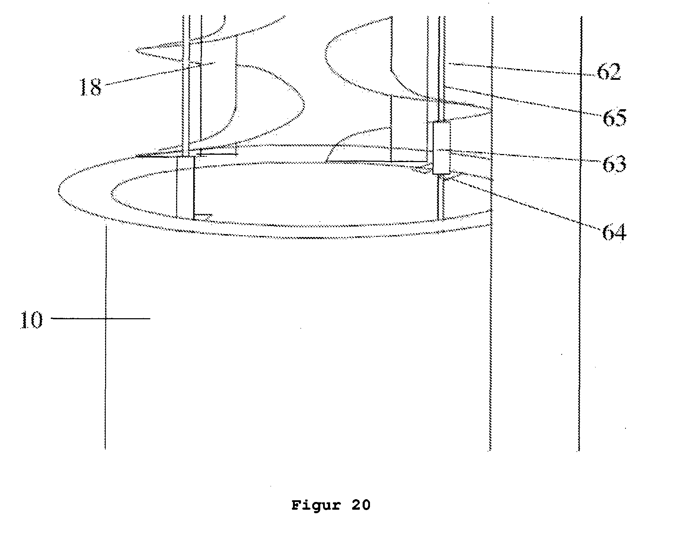

Figur 20 zeigt eine skizzierte Ansicht der Aufhängeeinrichtung 62 für die in Schwerkraftrichtung klappbaren Teile 60 (nicht ersichtlich in Figur 20) der Platte 6 (nicht ersichtlich in Figur 20). Wie in Figur 20 gezeigt umfasst die Aufhängeeinrichtung 62 ein Aufsetzelement 64, welches mit der Stange 65 der Aufhängeeinrichtung 62 lösbar verbunden ist, und welches in Schliessstellung der klappbaren Teile 60 der Platte 6 gemäss Figur 20 auf einem Halteelement 63 an der Prozessraumwand 10 aufliegt.

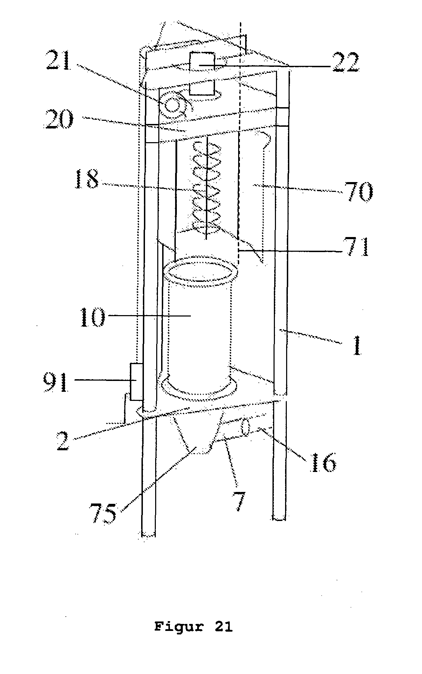

Figur 21 zeigt eine perspektivische Ansicht der fünften Variante der erfindungsgemässen Vorrichtung mit Abdeckelementen 70 für die Wendeschnecken 18, welche zu einer Achse 71 klappbar sind.

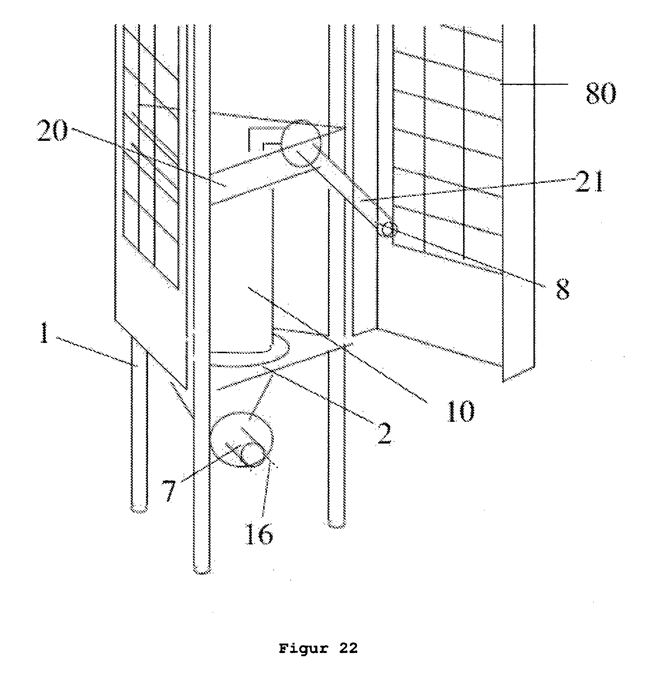

Figur 22 zeigt eine perspektivische Ansicht der fünften Variante der erfindungsgemässen Vorrichtung, wobei als Schutz hinsichtlich der Wendeschnecken 18 (nicht ersichtlich in Figur 21) an die Befestigungseinrichtung 1 ein Aussengitter 80 angebracht ist. Im Weiteren zeigt Figur 22 das an der Abdeckung 20 angebrachte Luftabfuhrrohr 21, welches horizontal angeordnet ist.

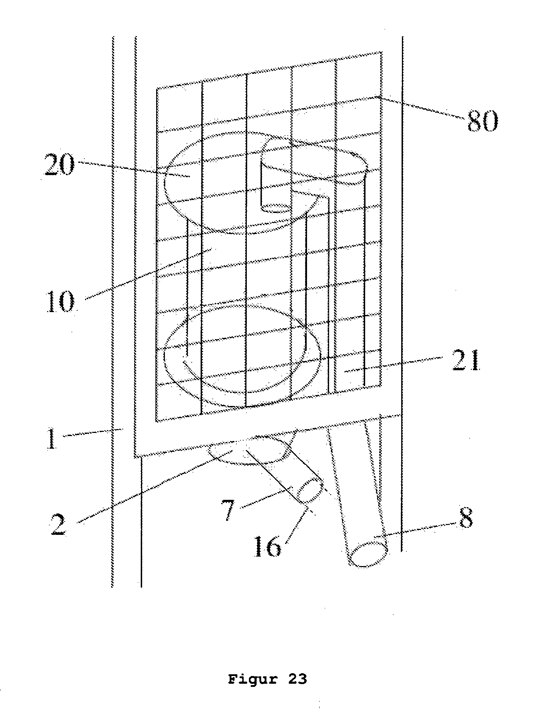

Figur 23 zeigt eine perspektivische Ansicht der fünften Variante der erfindungsgemässen Vorrichtung mit dem Aussengitter 80 analog zu Figur 22, wobei das Luftabfuhrrohr 21 vertikal angeordnet ist und durch einen Zwischenraum zwischen der Befestigungseinrichtung 1 und dem Aussengitter 80 von der Vorrichtung wegführt.

Im Weiteren wird anhand von Ausführungsbeispielen das erfindungsgemässe Verfahren erläutert.

### Beispiel 1:

In einem bevorzugten Verfahren anhand der erfindungsgemässen Vorrichtung werden zunächst 50kg Braugerste durch die dafür vorgesehene Öffnung zur Zuführung 23 in den geschlossenen Prozessraum 11 gefördert. In einem Einweichungsschritt wird temperiertes Wasser mit einer Temperatur von 10 bis 20°C durch die Öffnung zur Zuführung 23 in den Prozessraum 11 gegeben, bis die Braugerste unter Wasser gesetzt ist. Die Braugerste wird solange eingeweicht, bis diese 36 bis 40wt% Wasser aufgenommen hat. In einem nachfolgenden Schritt wird das Wasser anhand eines Wasserablasshahns an der Aufnahmeeinrichtung 2 abgelassen. In einem anschliessenden Keimungsschritt während 2 bis 8 Tagen wird mittels konditionierter gekühlter Luft mit einer Temperatur von 12 bis 16°C die Braugerste belüftet und anhand von drei Wendeschnecken am Rührwerk 22 aufgelockert. In einem darauf folgenden Darrschritt wird die Braugerste bis zu einem Wassergehalt von 4wt% Wassergehalt durch einen Luftstrom mit einer Temperatur von 85 bis 120°C von einer Fluidleitung getrocknet. Die Trocknung als abschliessender Prozessschritt macht das verarbeitete Korn lagerfähig.

### Beispiel 2:

Alternativ zum Beispiel 1 kann bei der Herstellung von Kwas aber auch mit Roggen als zu verarbeitendes Korn nach dem Keimungsschritt bei sofortiger Weiterverarbeitung auf einen Trocknungsschritt verzichtet werden. Der Roggen wird dann direkt nach der Keimung fermentiert.

### Beispiel 3:

In einem weiteren bevorzugten Verfahren anhand der erfindungsgemässen Vorrichtung werden Linsen analog den Prozessschritten und Parametern von Beispiel 1 behandelt, wobei jedoch nach der Trocknung ein Wassergehalt von 8 bis 12wt% angestrebt wird. Optional werden die Linsen nach dem Keimen oder Darren, beispielsweise mittels Milchsäurebakterien beziehungsweise Laktobazillen fermentiert.

## Patentansprüche

1. Vorrichtung zum Weichen, Keimen, Darren, Fermentieren oder Kombinationen daraus von Korn, insbesondere Getreide, Pseudogetreide, Ölsaaten oder Hülsenfrüchte, umfassend eine Aufnahmeeinrichtung (2) zur Aufnahme einer Platte (6) mit mindestens einer Öffnung (13) und einer Prozessraumwand (10), wobei die Platte (6) und die Prozessraumwand (10) einen Prozessraum (11) bilden, der auf der der Platte (6) abgewandten Seite offen ist, wobei die Vorrichtung eine Abdeckung (20) für die Prozessraumwand (10) umfasst zur Bildung eines geschlossenen Prozessraums (11), wobei die Abdeckung (20) und die Prozessraumwand (10) bei bestimmungsgemässem Gebrauch im Wesentlichen dichtend zueinander ausgebildet sind,
**dadurch gekennzeichnet, dass** zur Entleerung der Vorrichtung
- die Aufnahmeeinrichtung (2) an und / oder in einer Befestigungseinrichtung (1) anbringbar ist und die Aufnahmeeinrichtung (2) schwenkbar relativ zur Befestigungseinrichtung (1) gelagert ist; und / oder
- die Platte (6) mit mindestens einer Öffnung (13) mindestens zwei insbesondere an einer gemeinsamen Achse bei bestimmungsgemässem Gebrauch in Richtung der Schwerkraft klappbare Teile (60) umfasst.

2. Vorrichtung gemäss Anspruch 1, **dadurch gekennzeichnet, dass** die Abdeckung (20) insbesondere an der Befestigungseinrichtung anbringbar ist und relativ zur Prozessraumwand (10) dichtend axial verschiebbar und / oder schwenkbar angeordnet ist.

3. Vorrichtung gemäss Anspruch 1 oder 2, **dadurch gekennzeichnet, dass** die Aufnahmeeinrichtung (2) schwenkbar relativ zur Befestigungseinrichtung (1) gelagert ist in einem Winkel α zu einer Vertikalstellung der Aufnahmeeinrichtung von bevorzugt ±90°, noch bevorzugter ±110°, am meisten bevorzugt +180°.

4. Vorrichtung gemäss Anspruch 2, **dadurch gekennzeichnet, dass** die Abdeckung (20) relativ zur Prozessraumwand (10) manuell und/oder mittels eines Antriebs, insbesondere über eine Führung zwischen Abdeckung (20) und einer Befestigungseinrichtung (1), verschiebbar und / oder schwenkbar ist, insbesondere zumindest mittels einem der folgenden Antriebe und/oder Kombinationen davon: Seilzug, Spindelhubantrieb, hydraulischer Antrieb, pneumatischer Antrieb, elektrischer Antrieb.

5. Vorrichtung gemäss einem der vorherigen Ansprüche, **dadurch gekennzeichnet, dass** die Vorrichtung eine Schwenkeinrichtung zum Schwenken der Aufnahmeeinrichtung (2) relativ zur Befestigungseinrichtung (1) aufweist, wobei die Schwenkeinrichtung insbesondere zumindest einen Antrieb und ein Getriebe (30) umfasst.

6. Vorrichtung gemäss einem der vorherigen Ansprüche, **dadurch gekennzeichnet, dass** die Aufnahmeeinrichtung (2) eine Fluidleitung umfasst zur Leitung eines Fluids zur Platte (6) und/oder von der Platte (6) weg, wobei insbesondere die Platte (6) durch die Aufnahmeinrichtung (2) dichtend zur Umgebung auf der dem Prozessraum (11) abgewandten Seite aufgenommen ist.

7. Vorrichtung gemäss Anspruch 6, **dadurch gekennzeichnet, dass** die Vorrichtung eine erste Leitung (16) zur Zufuhr und/oder Abfuhr eines Gases, insbesondere Luft, in die Fluidleitung der Aufnahmeeinrichtung (2) aufweist.

8. Vorrichtung gemäss einem der Ansprüche 6 oder 7, **dadurch gekennzeichnet, dass** ein Abschnitt (3) der Fluidleitung und/ oder der ersten Leitung (16) in der Befestigungseinrichtung (1) derart gelagert ist, so dass die Fluidleitung oder die erste Leitung (16) im Wesentlichen um eine Längsachse (15) des Abschnitts (3) schwenkbar ist.

9. Vorrichtung gemäss einem der vorherigen Ansprüche, **dadurch gekennzeichnet, dass** die Prozessraumwand (10) und / oder die Abdeckung (20) aus, insbesondere transparentem, Kunststoff, aus Metall oder Kombinationen daraus besteht.

10. Vorrichtung gemäss einem der vorherigen Ansprüche, **dadurch gekennzeichnet, dass** die Abdeckung (20) fluidleitend mit einer zweiten Leitung (21) zur Zufuhr und/oder Abfuhr eines Gases, insbesondere Luft, verbunden ist.

11. Vorrichtung gemäss Anspruch 10, **dadurch gekennzeichnet, dass** die Abdeckung (20) bei axialer Verschiebung relativ zur Prozessraumwand (10) bei zumindest abschnittsweiser Verschiebung bei bestimmungsgemässem Gebrauch fluidleitend mit der Befestigungseinrichtung (1), insbesondere auf der Oberseite der Befestigungseinrichtung, mittels der zweiten Leitung (21) verbunden ist.

12. Vorrichtung gemäss einem der Ansprüche 10 oder 11, **dadurch gekennzeichnet, dass** zumindest ein Anschluss für ein Gas, insbesondere Luftzufuhrstutzen (7) und / oder Luftabfuhrstutzen (8), fest an der Befestigungseinrichtung (1) angeordnet ist.

13. Vorrichtung gemäss einem der vorherigen Ansprüche, **dadurch gekennzeichnet, dass** ein Rührwerk (22) zum Antreiben von mindestens einem Rührwerkzeug zur Umwälzung des Korns im Prozessraum (11), insbesondere ausgestattet mit einem Antriebsmotor, an der Abdeckung (20) und / oder an der Aufnahmeeinrichtung (2) angebracht ist.

14. Verfahren, insbesondere durchgeführt mittels einer Vorrichtung gemäss einem der vorherigen Ansprüche, zur Behandlung von Korn, insbesondere Getreide, Pseudogetreide, Ölsaaten oder Hülsenfrüchte, beinhaltend mindestens die Prozessschritte:
(i) Befüllen eines geschlossenen Prozessraums (11) einer Vorrichtung zur Behandlung von Korn mit Korn und Wasser,
wobei der Prozessraum (11) aus einer Platte (6) mit mindestens einer Öffnung (13), einer Prozessraumwand (10) und einer Abdeckung (20) gebildet wird, die von einer an und / oder in einer Befestigungseinrichtung angebrachten Aufnahmeeinrichtung aufgenommen sind, wobei die Abdeckung (20) und die Prozessraumwand (10) bei bestimmungsgemässem Gebrauch im Wesentlichen dichtend zueinander ausgebildet sind,
(ii) Weichen des Korns im Wasser
(iii)Keimen des Korns, insbesondere unter konditionierter Luftzufuhr
(iv) optional Darren des Korns bis zu einer Feuchtigkeit
(v) optional Fermentieren des Korns
(vi) Entleeren des in den vorherigen Schritten behandelten Korns aus dem geschlossenen Prozessraum (11)
wobei die Prozessschritte (iv) und (v) in deren zeitlicher Abfolge austauschbar sind,
**dadurch gekennzeichnet, dass** Prozessschritt (vi) mittels
∘ Öffnen des Prozessraums (11) und Ausschwenken der Aufnahmeeinrichtung (2) relativ zur Befestigungseinrichtung (1); und / oder
∘ Öffnen von mindestens zwei insbesondere an einer gemeinsamen Achse bei bestimmungsgemässem Gebrauch in Richtung der Schwerkraft klappbaren Teilen (60) der Platte (6)
erfolgt.

15. Verwendung der Vorrichtung gemäss einem der Ansprüche 1 bis 13 zum Weichen, Keimen, Darren, Fermentieren und Kombinationen daraus von Korn, insbesondere gemäss einem Verfahren gemäss dem Anspruch 14.

## Claims

1. A device for steeping, germinating, kiln drying and fermenting or combinations thereof of corn, in particular grain, pseudo-grain, oil seeds or legumes, comprising a receiving device (2) for receiving a plate (6) with at least one opening (13) and a processing chamber wall (10), wherein the plate (6) and the processing chamber wall (10) form a processing chamber (11) that is open on the side facing away from the plate (6), wherein the device comprises a cover (20) for the processing chamber wall (10) for forming a closed processing chamber (11), wherein the cover (20) and the processing chamber wall (10) are designed so as to be substantially sealed relative to one another when being used as intended,
**characterized in that** for emptying the device
- the receiving device (2) can be attached to and/or in a fixing device (1) and the receiving device (2) is pivotally mounted relative to the fixing device (1); and/or
- the plate (6) with at least one opening (13) comprises at least two parts (60) that can be folded in particular in the gravitational direction about a common axis when being used as intended.

2. The device according to claim 1, **characterized in that** the cover (20) can be attached in particular to the fixing device and is arranged so as to be sealingly and axially movable and/or pivotable relative to the processing chamber wall (10).

3. The device according to claim 1 or 2, **characterized in that** the receiving device (2) is pivotally mounted relative to the fixing device (1) at an angle α relative to a vertical position of the receiving device of preferably ± 90°, more preferably ± 110°, most preferably ± 180°.

4. The device according to claim 2, **characterized in that** the cover (20) is movable and/or pivotable relative to the processing chamber wall (10) manually and/or by means of a drive, in particular by means of a guidance between cover (20) and a fixing device (1), in particular by means of one of the following drives and/or combinations thereof: cable pull, spindle drive, hydraulic drive, pneumatic drive, electrical drive.

5. The device according to any one of the preceding claims, **characterized in that** the device comprises a pivoting device for pivoting the receiving device (2) relative to the fixing device (1), wherein the pivoting device in particular comprises at least one drive and one transmission (30).

6. The device according to any one of the preceding claims, **characterized in that** the receiving device (2) comprises a fluid conduit for conducting a fluid to the plate (6) and/or away from the plate (6), wherein in particular the plate (6) is received by the receiving device (2) in a sealing manner relative to the environment on the side facing away from the processing chamber (11).

7. The device according to claim 6, **characterized in that** the device comprises a first conduit (16) for supplying and/or removing a gas, in particular air, into the fluid conduit of the receiving device (2).

8. The device according to claim 6 or 7, **characterized in that** a portion (3) of the fluid conduit and/or the first conduit (16) is supported in the fixing device (1) in such a manner that the fluid conduit or the first conduit (16) is substantially pivotable about a longitudinal axis (15) of the portion (3).

9. The device according to any one of the preceding claims, **characterized in that** the processing chamber wall (10) and/or the cover (20) is made, in particular, of a transparent plastic material, metal or a combination thereof.

10. The device according to any one of the preceding claims, **characterized in that** the cover (20) is connected in a fluid-conducting manner with a second conduit (21) for supplying and/or removing a gas, in particular air.

11. The device according to claim 10, **characterized in that**, when being axially moved relative to the processing chamber wall (10) and being moved at least in portions and when being used as intended, the cover (20) is connected to the fixing device (1), in particular on the upper side of the fixing device, by means of the second conduit (21) in a fluid-conducting manner.

12. The device according to claim 10 or 11, **characterized in that** at least one connector for a gas, in particular an air supply port (7) and/or air removal port (8), is firmly arranged at the fixing means (1).

13. The device according to any one of the preceding claims, **characterized in that** an agitator (22) for driving at least one agitating tool for turning the grain in the processing chamber (11), in particular provided with a driving motor, is attached to the cover (20) and/or the receiving device (2).

14. A method, in particular carried out by means of a device according to any one of the preceding claims, for processing corn, in particular grain, pseudo-grain, oil seeds or legumes, comprising at least the processing steps:
(i) filling a closed processing chamber (11) in a device for processing corn with corn and water,
wherein the processing chamber (11) is formed by a plate (6) with at least one opening (13), a processing chamber wall (10) and a cover (20), which are received by a receiving device attached to and/or in a fixing device, wherein the cover (20) and the processing chamber wall (10) are designed so as to be substantially sealed relative to one another when being used as intended,
(ii) steeping the corn in the water,
(iii) germinating the corn, in particular under conditioned air supply,
(iv) optionally kiln drying the corn up to a humidity,
(v) optionally fermenting the corn,
(vi) removing the corn processed in the previous steps from the closed processing chamber (11),
wherein the temporal sequence of the processing steps (iv) and (v) may be interchanged, **characterized in that** processing step (vi) takes place by means of
∘ opening the processing chamber (11) and pivoting the receiving device (2) relative to the mounting device (1); and/or
∘ opening at least two parts (60) of the plate (6) that can be folded in particular in the gravitational direction about a common axis when being used as intended.

15. Use of the device according to any one of claims 1 to 13 for steeping, germinating, kiln drying and fermenting and combinations thereof of corn, in particular according to a method according to claim 14.

## Revendications

1. Installation pour le mouillage, la germination, la dessiccation, la fermentation, ou pour des combinaisons de celles-ci, de grains, en particulier de céréales, de pseudo-céréales, d'oléagineux ou de légumineuses, comprenant un dispositif de réception (2) pour la réception d'une plaque (6) avec au moins une ouverture (13) et une paroi de compartiment de traitement (10), la plaque (6) et la paroi de compartiment de traitement (10) formant un compartiment de traitement (11) ouvert sur le côté distant de la plaque (6), l'installation comprenant un couvercle (20) pour la paroi de compartiment de traitement (10), permettant de former un compartiment de traitement (11) clos, le couvercle (20) et le compartiment de traitement (10) étant réalisés sensiblement étanches l'un par rapport à l'autre en cas d'usage conforme à sa destination de l'installation,
**caractérisée en ce que**, pour la vidange de l'installation,
- le dispositif de réception (2) peut être appliqué contre et / ou dans un dispositif de fixation (1), et le dispositif de réception (2) est monté de manière pivotante par rapport au dispositif de fixation (1) ; et / ou
- **en ce que** la plaque (6) comprend par au moins une ouverture (13) au moins deux parties (60) rabattables en particulier autour d'un axe commun dans la direction de la force de gravité en cas d'usage conforme à sa destination de l'installation.

2. Installation selon la revendication 1, **caractérisée en ce que** le couvercle (20) peut en particulier être appliqué contre le dispositif de fixation et être déplaçable axialement de façon étanche par rapport à la paroi de compartiment de traitement (10), et / ou est disposé de manière pivotante.

3. Installation selon la revendication 1 ou la revendication 2, **caractérisée en ce que** le dispositif de réception (2) est monté de manière pivotante par rapport au dispositif de fixation (1) suivant un angle avantageusement sensiblement égal à 90°, préférentiellement sensiblement égal à 110°, et tout particulièrement sensiblement égal à 180° par rapport à une position verticale du dispositif de réception.

4. Installation selon la revendication 2, **caractérisée en ce que** le couvercle (20) peut être déplacé et / ou pivoté manuellement et/ou par un entraînement par rapport à la paroi de compartiment de traitement (10), en particulier au moyen d'un guidage entre le couvercle (20) et un dispositif de fixation (1), en particulier au moins par un des entraînements et/ou combinaisons d'entraînements suivants : câble sous gaine, vérin de levage, entraînement hydraulique, entraînement pneumatique, entraînement électrique.

5. Installation selon l'une des revendications précédentes, **caractérisée en ce que** ladite installation comprend un dispositif de pivotement pour le pivotement du dispositif de réception (2) par rapport au dispositif de fixation (1), le dispositif de pivotement comprenant en particulier au moins une entraînement et un engrenage (30).

6. Installation selon l'une des revendications précédentes, **caractérisée en ce que** le dispositif de réception (2) comprend une conduite de fluide pour l'amenée d'un fluide vers la plaque (6) et/ou son évacuation de la plaque (6), la plaque (6) étant en particulier reçue de manière étanche à l'environnement par le dispositif de réception (2) sur le côté distant du compartiment de traitement (11).

7. Installation selon la revendication 6, **caractérisée en ce que** ladite installation comporte une première conduite (16) pour l'amenée et/ou l'évacuation d'un gaz, en particulier de l'air, dans la conduite de fluide du dispositif de réception (2).

8. Installation selon la revendication 6 ou la revendication 7, **caractérisée en ce qu'**un segment (3) de la conduite de fluide et/ ou de la première conduite (16) est monté dans le dispositif de fixation (1) de telle manière que la conduite de fluide ou la première conduite (16) est sensiblement pivotante autour d'un axe longitudinal (15) du segment (3).

9. Installation selon l'une des revendications précédentes, **caractérisée en ce que** la paroi du compartiment de traitement (10) et / ou le couvercle (20) sont en matière synthétique en particulier transparente, en métal ou en combinaisons de ceux-ci.

10. Installation selon l'une des revendications précédentes, **caractérisée en ce que** le couvercle (20) est en liaison de conduction fluidique avec une deuxième conduite (21) pour l'amenée et/ou l'évacuation d'un gaz, en particulier de l'air.

11. Installation selon la revendication 10, **caractérisée en ce que**, lors d'un déplacement axial par rapport à la paroi de compartiment de traitement (10) pour un déplacement au moins partiel en cas d'usage conforme à sa destination de l'installation, le couvercle (20) est en liaison de conduction fluidique avec le dispositif de fixation (1), en particulier sur le dessus du dispositif de fixation, au moyen de la deuxième conduite (21).

12. Installation selon la revendication 10 ou la revendication 11, **caractérisée en ce qu'**au moins un raccord pour un gaz, en particulier une tubulure d'amenée d'air (7) et / ou une tubulure d'évacuation d'air (8), est fixement monté sur le dispositif de fixation (1).

13. Installation selon l'une des revendications précédentes, **caractérisée en ce qu'**un agitateur (22) pour l'entraînement d'au moins un outil d'agitation destiné à malaxer les grains dans le compartiment de traitement (11), équipé en particulier d'un moteur d'entraînement, est monté contre le couvercle (20) et / ou contre le dispositif de réception (2).

14. Procédé, exécuté en particulier par une installation selon l'une des revendications précédentes, pour le traitement de grains, en particulier de céréales, de pseudo-céréales, d'oléagineux ou de légumineuses, comprenant au moins les étapes suivantes :
(i) remplissage en grains et en eau d'un compartiment de traitement (11) clos d'une installation pour le traitement de grains,
le compartiment de traitement (11) étant formé par une plaque (6) avec au moins une ouverture (13), une paroi de compartiment de traitement (10) et un couvercle (20) logés dans un dispositif de réception appliqué contre et / ou dans un dispositif de fixation, le couvercle (20) et le compartiment de traitement (10) étant réalisés sensiblement étanches l'un par rapport à l'autre en cas d'usage conforme à sa destination de l'installation,
(ii) mouillage des grains dans l'eau
(iii) germination des grains, en particulier par amenée d'air conditionné
(iv) dessiccation facultative des grains jusqu'à un certain degré d'humidité
(v) fermentation facultative des grains
(vi) évacuation des grains traités lors des étapes précédentes hors du compartiment de traitement (11)
les étapes (iv) et (v) étant temporellement substituables l'une à l'autre,
**caractérisé en ce que** l'étape (vi) est exécutée par
∘ ouverture du compartiment de traitement (11) et basculement du dispositif de réception (2) par rapport au dispositif de fixation ( 1 ) ; et / ou par
∘ ouverture d'au moins deux parties (60) de la plaque (6) rabattables en particulier autour d'un axe commun dans la direction de la force de gravité en cas d'usage conforme à sa destination de l'installation.

15. Utilisation de l'installation selon l'une des revendications 1 à 13 pour le mouillage, la germination, la dessiccation, la fermentation, ou pour des combinaisons de celles-ci, de grains, en particulier conformément à un procédé selon la revendication 14.
